# EUROPÄISCHE PATENTSCHRIFT

(11) **EP 2 181 783 B1**
(45) Veröffentlichungstag und Bekanntmachung des Hinweises auf die Patenterteilung: **26.10.2011**
(21) Anmeldenummer: 09174790.7
(22) Anmeldetag: 02.11.2009
(51) Int. Cl.: B21K 1/12, B21J 5/08, B21J 5/12, F16C 3/02

(54) **Stange und Verfahren zu ihrer Herstellung**
Splined rod with curled end and method for its production
Tige cannelée avec rebord d'extrêmité roulé et son procédé de fabrication

(30) Priorität: 03.11.2008 DE 102008055637
(43) Veröffentlichungstag der Anmeldung: 05.05.2010
(73) Patentinhaber: Südsta AG, 6304 Zug (CH)
(72) Erfinder:
(74) Vertreter: Eisenführ, Speiser & Partner

(56) Entgegenhaltungen:
- EP-A- 1 048 375
- DE-A1-102004 001 141
- JP-A- 4 356 324
- US-A- 2 313 116

## Beschreibung

Die Erfindung betrifft ein Verfahren zur Bearbeitung einer Stange mit einer im Wesentlichen zylinderförmigen Umfangsoberfläche. Die Erfindung betrifft weiterhin eine Stange hergestellt nach einem solchen Verfahren. Die Erfindung betrifft schließlich eine Stange, insbesondere eine Stange zum Aufnehmen von axialen Zug- und Druckkräften und von Drehmomentkräften mit einer im Wesentlichen zylinderförmigen Umfangsoberfläche.

Verfahren und Vorrichtungen der eingangs genannten Art sind beispielsweise aus der JP 4-356324, auf der den Oberbegriff der Ansprüche 1 und 12 basiert, bekannt geworden.

Stangen mit einer im Wesentlichen zylinderförmigen Umfangsoberfläche sind beispielsweise als Stabilenker oder als Pendelstützen für Fahrzeugaufhängungen in der Form von Metallstangen aus dem Stand der Technik bekannt. Insbesondere die vorgenannten Pendelstützen für Fahrzeugaufhängungen weisen zur Erfüllung ihrer entsprechenden Funktion an ihren Enden Umspritzungen auf, die die entsprechenden Kräfte auf die Pendelstütze übertragen bzw. von dieser ableiten.

Aufgabe der vorliegenden Erfindung ist es, Stangen der vorstehenden Art zu verbessern, auch durch zur Verfügungstellung von verbesserten Verfahren zur Bearbeitung bzw. Herstellung von Stangen.

Diese Aufgabe wird durch die Gegenstände der unabhängigen Ansprüche gelöst.

Bevorzugte Ausführungsformen der Erfindung sind in den Unteransprüchen angegeben.

Die Erfindung umfasst unter anderem die Erkenntnis, dass insbesondere bei den vorgenannten Pendelstützen für Fahrzeugaufhängungen, aber auch bei anderen Stangen, die an ihren Enden umspritzte, angegossene, und/oder angesinterte Teile aus Kunststoff und/oder Metall tragen müssen, um die auf die entsprechenden Enden wirkenden Zug- und/oder Druckkräfte und/oder Drehmomentkräfte in die Stange ein bzw. aus der Stange abzuleiten, diese Kräfte insbesondere extrem hohe Anforderungen an die Verbindungsstelle zwischen dem an dem Ende der Stange sitzenden Zusatzteil und der Stange stellen. Dabei hat die Erfindung insbesondere erkannt, dass es insbesondere zu allerhöchsten Anforderungen an diese Verbindungsstelle kommt, wenn sowohl axiale Kräfte als auch Drehmomentkräfte gleichzeitig durch diese Verbindungsstelle übertragen werden sollen.

Durch das erfindungsgemäße Verfahren zur Bearbeitung einer Stange und der daraus resultierenden Stange ist es möglich, extrem hohe Drehmomentkräfte auf entsprechende an diesen Stelle angespritzte, angegossene oder angesinterte Zusatzteile aus Kunststoff und/oder Metall zu übertragen. Diese hohen Kräfte lassen sich insbesondere übertragen, da die Stange bevorzugt mit einer im Wesentlichen parallel zu einer Längsachse der Stange und entlang mindestens eines Teils der Länge der Stange verlaufenden Nut versehen ist, die eine Aufbördelung aufweist, welche die Nut bevorzugt abschließt bzw. zum Ende der Stange hin begrenzt.

Vor allem ist es Dank der erfindungsgemäßen Aufbördelung möglich, auf die aus dem Stand der Technik bekannten Schiebematrizen bei der Herstellung der Stangen zu verzichten. Auch ist ein Drehen des Stangenrohlings bei der Herstellung der Stangen nicht mehr notwendig, so dass das erfindungsgemäße Verfahren und damit auch die erfindungsgemäße Stange deutlich wirtschaftlicher ist.

Besonders vorteilhaft ist es, wenn in gleichmäßigen Abständen über die Umfangsoberfläche verteilt mindestens sechs Nuten vorgesehen sind. Die Längen der Nuten entlang der Längsachse der Stange richtet sich dabei nach der Erstreckung des anzuspritzenden, anzugießenden oder anzusinternden Zusatzteils entlang der Länge der Stange. Bevorzugt ist die Nut mit einem im Wesentlichen U- und/oder V-förmigen Querschnitt versehen. Besonders bevorzugt ist es dabei, wenn der Querschnitt einem möglichst eckigen U entspricht, d.h. mit anderen Worten einem auf einer Seite offenen Rechteck entspricht. Denn auf diese Weise kommt es zu einer extrem starken Verankerung des angespritzten, angegossenen oder angesinterten Teils in diesem Bereich der Stange, so dass extrem hohe Drehmomentkräfte übertragen werden können.

Die Stange kann mit dem erfindungsgemäßen Verfahren gleichzeitig von beiden Seiten bearbeitet werden. Die Enden können jedoch auch nacheinander bearbeitet werden. Dabei kann jedes Ende jeweils identisch oder unterschiedlich gestaltet werden.

Bei dem erfindungsgemäßen Verfahren kann die Stange nur auf einer Seite gehalten oder auf beiden Seiten gehalten werden.

Eine bevorzugte Ausführungsform des erfindungsgemäßen Verfahrens zeichnet sich dadurch aus, dass der Schritt des Zwingens der Stange in den Hohlraum umfasst, dass die Stange in den Hohlraum geschoben wird.

Eine bevorzugte Ausführungsform des erfindungsgemäßen Verfahrens zeichnet sich dadurch aus, dass an einem, bevorzugt planen, Ende der Stange eine Einbuchtung eingebracht wird. Eine solche Einbuchtung, die bevorzugt etwa dem halben Durchmesser der Stange entspricht, hat den weiteren Vorteil, dass bei Druckkräften, die längsaxial auf die Stange wirken, ein Ausweichen der in diesem Endbereich der Stange liegenden Kunststoffumspritzung nach außen in Richtung Umfang der Stange nicht mehr möglich ist.

Eine bevorzugte Ausführungsform des erfindungsgemäßen Verfahrens zeichnet sich dadurch aus, dass die Einbuchtung mit einem, bevorzugt eine konvexe- und/oder halbkugelförmige und/oder eine kegelförmige und/oder kegelstumpfförmige und/oder pyramidenförmige Oberfläche aufweisenden, Stempel in das Ende der Stange eingedrückt wird.

Eine bevorzugte Ausführungsform des erfindungsgemäßen Verfahrens zeichnet sich dadurch aus, dass vor dem Einbringen der Einbuchtung, bevorzugt auch vor dem Einbringen der mindestens einen Nut, der Durchmesser der Stange entlang eines Bereiches an dem Ende der Stange verringert wird, wobei bevorzugt eine sich im Wesentlichen parallel zu der Längsachse der Stange erstreckende Länge des Bereichs einstellbar ist.

Eine bevorzugte Ausführungsform des erfindungsgemäßen Verfahrens zeichnet sich dadurch aus, dass das Verringern des Durchmessers der Stange in einem Ausmaß geschieht, dass der verringerte Durchmesser im Wesentlichen dem Durchmesser der Stange an dem Boden der mindestens einen Nut entspricht.

Eine bevorzugte Ausführungsform des erfindungsgemäßen Verfahrens zeichnet sich dadurch aus, dass die längsaxiale Ausdehnung des die Aufbördelung aufweisenden Abschnittes am Ende der Stange kleiner ist als die längsaxiale Ausdehnung des Bereiches der Stange mit verringertem Durchmesser, so dass nach dem Schritt des Aufbördelns in Längsrichtung der Stange gesehen zwischen der Aufbördelung und dem Beginn der Nut noch eine Rille mit dem zuvor verringerten Außendurchmesser verbleibt. Dank dieser Rille oder dieses Bundes kann eine an diesem Bereich mit Kunststoff ummantelte Stange extrem hohe Zugkräfte aufnehmen, da die Kunststoffummantelung in der Rille sehr fest sitzt. Dabei wird bevorzugt eine sich im Wesentlichen parallel zu der Längsachse der Stange erstreckende Länge der Rille bei der Herstellung eingestellt bzw. an die Kräfte, die von der Rille bzw. der Stange zu tragen sind, angepasst.

Bei einer bevorzugten Ausführungsform der Erfindung ist vorgesehen, dass parallel zu der Längsachse der Stange gesehen zwischen der mindestens einen Nut und dem zugeordneten Ende der Stange mindestens eine Rille in die Umfangsoberfläche, bevorzugt durch Walzen, lateral zur Längsachse der Stange, bevorzugt mit konvexer Oberfläche, eingebracht wird, wobei weiter bevorzugt zuvor der Schritt des Bildens der Aufbördelung weggelassen oder nur teilweise ausgeführt wird.

Bei einer bevorzugten Ausführungsform der Erfindung ist vorgesehen, dass der Außendurchmesser der Stange am Boden der mindestens einen Rille geringer ist als an dem Boden der mindestens einen Nut.

Die vorgenannte, zwischen Nut und Ende der Stange liegende Rille kann die weiter oben beschriebene Rille zwischen Nut und Aufbördelung ersetzen oder ergänzen. Es kann also ein Teil des zwischen Nut und Ende der Stange liegenden Bereiches als die zuerst beschriebene Rille ausgebildet sein und ein weiterer Teil als die an zweiter Stelle beschriebene Rille ausgebildet sein. Bevorzugt weist dabei die an erster Stelle beschriebene Rille einen flachen Boden auf, während die an zweiter Stelle beschriebene Rille einen konvexen Boden aufweist. Beide Rillen können jeweils in beliebiger Anzahl nebeneinander und auch abwechselnd zueinander vorgesehen sein. Durch die Kombinationsmöglichkeiten der beiden Rillenarten, deren Böden auch unterschiedliche Außendurchmesser aufweisen können, kann die Zugkraft, die die so gebildete Stange aufnehmen kann, an die erforderlichen Zugkräfte sehr genau angepasst werden. Als besonders vorteilhaft hat sich eine Ausformung der Erfindung erwiesen, bei der direkt im Anschluss an die Nuten eine Rille mit konvexem Boden folgt, dessen Ausdurchmesser geringer ist als der Boden der Nuten, wobei direkt anschließend eine Rille der zuerst genannten Art mit flachem Boden folgt, deren Außendurchmesser gleich dem Außendurchmessers des Bodens der Nuten ist, worauf wiederum eine Rille der zweiten genannten Art mit konvexem Boden folgt, dessen Außendurchmesser wiederum dem Außendurchmesser des konvexen Bodens der den Nuten unmittelbar benachbarten Rille entspricht. Zwischen der letztgenannten Rille und dem Ende der Stange kann dann beispielsweise der Bereich des verringerten Durchmessers liegen, wobei direkt benachbart zum Ende der Stange eine Aufbördelung vorgesehen sein kann oder auch die Aufbördelung weggelassen werden kann.

Eine bevorzugte Ausführungsform des erfindungsgemäßen Verfahrens zeichnet sich dadurch aus, dass das Einbringen der mindestens einen Nut, das Aufbördeln des Abschnittes am Ende der Stange und/oder das Einbringen der Einbuchtung in das Ende der Stange auch, bevorzugt ausschließlich, durch Massivumformung, insbesondere durch Kaltumformung und/oder Warmumformung, der Stange geschieht.

Eine besonders bevorzugte Ausführungsform der erfindungsgemäßen Stange zeichnet sich dadurch aus, dass die Stange an einem, bevorzugt planen, Ende eine Einbuchtung aufweist.

Eine besonders bevorzugte Ausführungsform der erfindungsgemäßen Stange zeichnet sich dadurch aus, dass die Einbuchtung eine konkave und/oder halbkugelförmige und/oder eine kegelförmige und/oder kegelstumpfförmige und/oder pyramidenförmige Oberfläche aufweist.

Eine besonders bevorzugte Ausführungsform der erfindungsgemäßen Stange zeichnet sich dadurch aus, dass zwischen dem die mindestens eine Nut aufweisenden Teil der Stange und der Aufbördelung auf der Umfangsoberfläche der Stange eine Rille mit einem gegenüber dem keine Nut aufweisenden Teil der Stange verringerten Außendurchmesser gebildet ist. Dabei wird bevorzugt eine sich im Wesentlichen parallel zu der Längsachse der Stange erstreckende Länge der Rille bei der Herstellung eingestellt bzw. an die Kräfte, die von der Rille bzw. der Stange zu tragen sind, angepasst.

Eine besonders bevorzugte Ausführungsform der erfindungsgemäßen Stange zeichnet sich dadurch aus, dass der Außendurchmesser der Aufbördelung im Wesentlichen gleich dem Außendurchmesser der Stange in dem keine Nut aufweisenden Teil der Stange ist.

Eine besonders bevorzugte Ausführungsform der erfindungsgemäßen Stange zeichnet sich dadurch aus, dass die mindestens eine Nut, die Aufbördelung, die Einbuchtung und/oder die Rille auch, bevorzugt ausschließlich, durch Massivumformung, insbesondere durch Kaltumformung und/oder Warmumformung von im Wesentlichen aus Metall bestehenden Teilen eines entsprechenden Stangenrohlings gebildet sind.

Bei einer besonders bevorzugten Ausführungsform der erfindungsgemäßen Stange ist vorgesehen, dass parallel zu der Längsachse der Stange gesehen zwischen der mindestens einen Nut und dem zugeordneten Ende der Stange in der Umfangsoberfläche der Stange mindestens eine lateral zur Längsachse der Stange verlaufende Rille, bevorzugt mit konvexer Oberfläche, gebildet ist, wobei weiter bevorzugt an diesem Ende der Stange keine Aufbördelung vorgesehen oder nur eine Aufbördelung vorgesehen ist, deren Außendurchmesser geringer ist als der Außendurchmesser der Stange in dem keine Nut aufweisenden Teil der Stange.

Bei einer besonders bevorzugten Ausführungsform der erfindungsgemäßen Stange ist vorgesehen, dass der Außendurchmesser der Stange am Boden der mindestens einen Rille geringer ist als an dem Boden der mindestens einen Nut.

Die vorgenannte, zwischen Nut und Ende der Stange liegende Rille kann die weiter oben beschriebene Rille zwischen Nut und Aufbördelung ersetzen oder ergänzen. Es kann also ein Teil des zwischen Nut und Ende der Stange liegenden Bereiches als die zuerst beschriebene Rille ausgebildet sein und ein weiterer Teil als die an zweiter Stelle beschriebene Rille ausgebildet sein. Bevorzugt weist dabei die an erster Stelle beschriebene Rille einen flachen Boden auf, während die an zweiter Stelle beschriebene Rille einen konvexen Boden aufweist. Beide Rillen können jeweils in beliebiger Anzahl nebeneinander und auch abwechselnd zueinander vorgesehen sein. Durch die Kombinationsmöglichkeiten der beiden Rillenarten, deren Böden auch unterschiedliche Außendurchmesser aufweisen können, kann die Zugkraft, die die so gebildete Stange aufnehmen kann, an die erforderlichen Zugkräfte sehr genau angepasst werden. Als besonders vorteilhaft hat sich eine Ausformung der Erfindung erwiesen, bei der direkt im Anschluss an die Nuten eine Rille mit konvexem Boden folgt, dessen Ausdurchmesser geringer ist als der Boden der Nuten, wobei direkt anschließend eine Rille der zuerst genannten Art mit flachem Boden folgt, deren Außendurchmesser gleich dem Außendurchmessers des Bodens der Nuten ist, worauf wiederum eine Rille der zweiten genannten Art mit konvexem Boden folgt, dessen Außendurchmesser wiederum dem Außendurchmesser des konvexen Bodens der den Nuten unmittelbar benachbarten Rille entspricht. Zwischen der letztgenannten Rille und dem Ende der Stange kann dann beispielsweise der Bereich des verringerten Durchmessers liegen, wobei direkt benachbart zum Ende der Stange eine Aufbördelung vorgesehen sein kann oder auch die Aufbördelung weggelassen werden kann.

Eine besonders bevorzugte Ausführungsform der erfindungsgemäßen Stange zeichnet sich dadurch aus, dass die Stange an mindestens einem ihrer Enden mit einem bevorzugt aus Kunststoff bestehenden Verbindungsteil versehen, insbesondere ummantelt, bevorzugt umspritzt, ist.

Eine besonders bevorzugte Ausführungsform der erfindungsgemäßen Stange zeichnet sich dadurch aus, dass die Stange eine Pendelstütze oder ein Stabilenker für eine Fahrzeugaufhängung ist.

Im Folgenden wird die Erfindung anhand von Ausführungsbeispielen in den Zeichnungen beschrieben. In den Zeichnungen zeigt
- Fig. 1: eine Ausführungsform eines erfindungsgemäßen Verfahrens zur Bearbeitung einer Stange;
- Fig. 2: eine schematische Ansicht einer Ausführungsform einer erfindungs- gemäßen Stange;
- Fig. 3: einen Querschnitt durch die Stange der Figur 2 entlang der Linie A-A in der Figur 2;
- Fig. 4: eine perspektivische und vergrößerte Ansicht des in der Figur 2 rechts dargestellten Endes der Stange der Figur 2;
- Fig. 5: eine zweite Ausführungsform einer erfindungsgemäßen Stange;
- Fig. 6: einen Querschnitt durch die Stange der Figur 5 entlang der Linie B-B in der Figur 5;
- Fig. 7: einen Teil der Stange der Figur 5 entsprechend dem Ausschnitt A in der Figur 5;
- Fig. 8: eine dritte Ausführungsform einer erfindungsgemäßen Stange; und
- Fig. 9: einen Teil der Stange der Figur 8 entsprechend dem Ausschnitt C in der Figur 8.

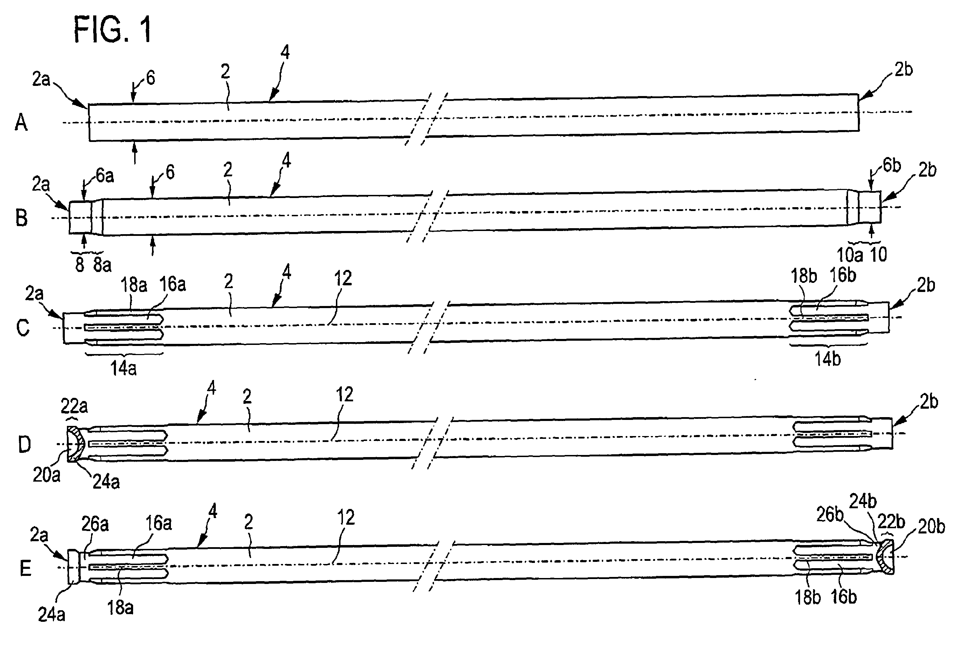

Figur 1 zeigt eine Ausführungsform eines erfindungsgemäßen Verfahrens zur Bearbeitung einer Stange 2 mit einer im Wesentlichen zylinderförmigen Umfangsoberfläche 4.

In der Stufe A wird zunächst die Stange 2 zur Verfügung gestellt. Die Stange 2 weist links ein planes Ende 2a und rechts ein planes Ende 2b auf.

Im Schritt B wird - durch Halten der Stange, beispielsweise an mindestens einem der Enden 2a oder 2b - im Bereich eines am Ende 2a der Stange 2 liegenden Abschnitts 8 der Durchmesser 6 der Stange 2 auf einem kleineren Durchmesser 6a verringert. Gleiches kann, gleichzeitig oder danach, am in der Figur 1 rechts dargestellten Ende 2b geschehen, in dem ein an dem Ende 2b der Stange 2 liegender Abschnitt 10 einen gegenüber dem Durchmesser 6 der Stange 2 verringerten Durchmesser 6b erhält. Alternativ, jedoch nicht dargestellt, kann am Ende 2b eine andere Bearbeitung stattfinden. Zwischen dem Abschnitt 8 mit verringertem Durchmesser 6a und dem Abschnitt 10 mit verringertem Durchmesser 6b und der übrigen Stange 2 mit ursprünglichem Durchmesser 6 sind bevorzugt Übergangsabschnitte 8a und 10a vorgesehen, die konusförmig einen kontinuierlich ansteigenden Durchmesser von dem verringerten Durchmesser 6a zu dem Durchmesser 6 bzw. von dem verringerten Durchmesser 6b zu dem Durchmesser 6 aufweisen.

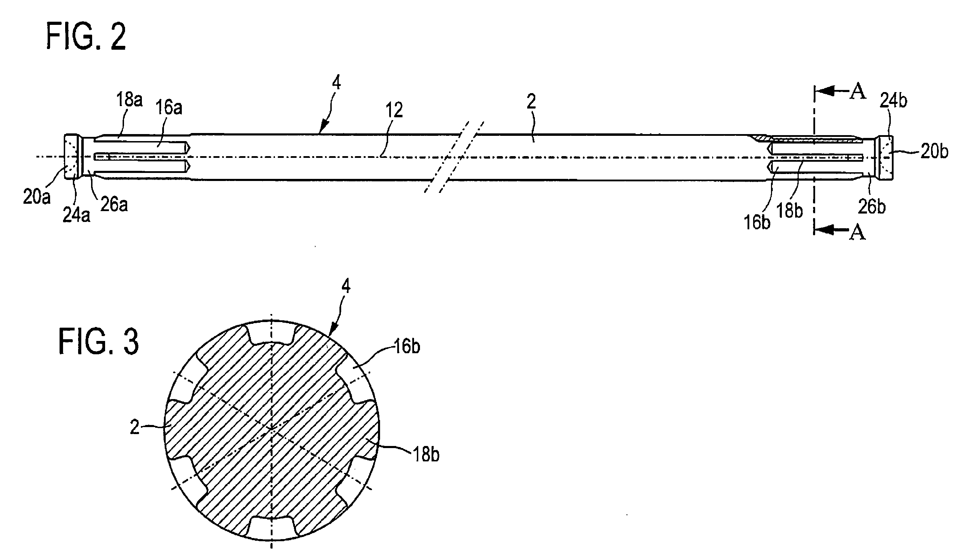

In Schritt C der Figur 1 werden im Wesentlichen parallel zu der Längsachse 12 der Stange 2 entlang eines benachbart zum linken Ende 2a der Stange 2 liegenden Teils 14a der Stange 2 und entlang eines benachbart zum rechten Ende 2b der Stange 2 liegenden Teils 14b der Stange 2 im Wesentlichen parallel zur Längsachse 12 der Stange 2 jeweils sechs Nuten 16a bzw. 16b eingebracht, indem die Stange 2 zumindest teilweise in einen nicht dargestellten Hohlraum gezwungen wird, der eine im Wesentlichen zylinderförmige Innenoberfläche aufweist, aus der mindestens eine Nase nach innen ragt. Dabei ist das Profil der Nase derart, dass das in der Figur 1 beziehungsweise genauer auch in Figur 3 dargestellte Profil der Nuten 16a und 16b entsteht. Die Nuten 16a und 16b werden dabei in einer Weise erzeugt, dass eine dafür verwendete, einen Stempel aufweisende Maschine stempelblockseitig und matrizenblockseitig Umformmatrizen aufweist, welche sechs nach innen ragende Nasen aufweisen und die Stange 2 durch die Bewegung des Stempels in Richtung Matrize die Nuten 16a und 16b eingeformt erhält. Das Einbringen der Nuten 16a und 16b geschieht gleichzeitig. Alternativ kann mit derselben Bohrung sowohl das Einbringen der am linken Ende 2a der Stange 2 vorgesehenen Nuten 16a als auch nach einem Herausziehen der Stange 2 aus dem Hohlraum der Maschine und Umdrehen der Stange 2 und erneutem Einstecken der Stange 2 in den Hohlraum auch das Einbringen der Nuten 16b am rechten Ende 2b der Stange 2 vorgenommen werden.

Wie darüber hinaus in der Darstellung der Stufe C der Figur 1 zu erkennen ist, ergibt sich durch die Übergänge 8a, 10a eine Abschrägung der zwischen den Nuten mit dem ursprünglichen Durchmesser 6 der Stange 2 stehen bleibenden Stege 18a bzw. 18b.

In der Stufe D wird schließlich in einem weiteren Schritt, beispielsweise durch einen entsprechenden, nicht dargestellten Stempel, eine mit einer konvexen und im Wesentlichen halbkugelförmigen Oberfläche versehene Einbuchtung 20a in das linke Ende 2a der Stange 2 eingedrückt. Dabei wird die Einbuchtung 20a solange in das Ende 2a der Stange 2 eingedrückt, bis sich in einem an dem Ende 2a der Stange 2 liegenden Abschnitt 22a eine Aufbördelung 24a auf der Umfangsoberfläche 4 der Stange 2 bildet. Zur Verdeutlichung der Struktur der Einbuchtung 20a bzw. der Aufbördelung 24a ist in der Figur 1 in Schritt D die Aufbördelung 24a im Schnitt dargestellt.

Im Schritt E wird in entsprechender Weise wie in Schritt D mit dem anderen Ende 2b der Stange 2 eine Einbuchtung 20b solange gebildet, bis sich in einem Abschnitt 22b am rechten Ende 2b der Stange 2 eine Aufbördelung 24b bildet. Wie auch im Schritt D ist auch im Schritt E die längsaxiale Ausdehnung 22a bzw. 22b des die Aufbördelung 24a bzw. 24b aufweisenden Abschnittes 22a bzw. 22b der Stange 2 kleiner als die längsaxiale Ausdehnung des Abschnittes 8 bzw. 10 der Stange 2 mit verringertem Durchmesser 6a bzw. 6b, so dass nach den Schritten D und E des Aufbördelns in Längsrichtung der Stange 2 gesehen zwischen der Aufbördelung 24a bzw. 24b und dem Beginn der Nuten 16a bzw. 16b noch eine Rille 26a bzw. 26b mit dem verringerten Außendurchmesser 6a bzw. 6b verbleibt. An dieser Stelle ist auch zu erkennen, dass der Boden der Nuten 16a und 16b jeweils den gleichen Außendurchmesser aufweist, wie die Abschnitte 8 bzw. 10 mit verringertem Außendurchmesser 6a bzw. 6b.

Alle Schritte A-E in der Figur 1 werden durch Kaltumformung der aus Metall bestehenden Stange 2 vorgenommen.

Die Schritte D und E können auch weggelassen werden. Weiter alternativ können die Schritte D und E nur teilweise ausgeführt werden, d. h. in einer Weise, dass sich der Außendurchmesser der Aufbördelungen 24a und 24b nur unwesentlich, beispielsweise um etwa 10 %, über den Außendurchmesser 6a des Bereiches 10 mit verringertem Querschnitt erstreckt.

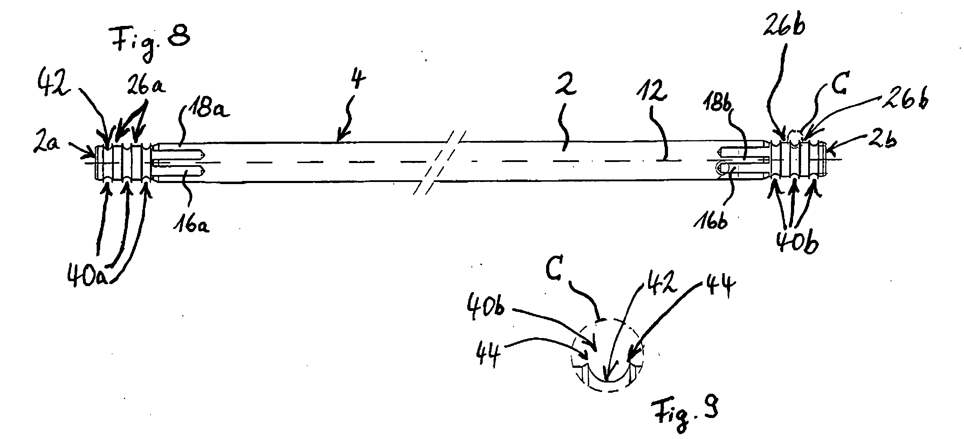

Im Bereich der Rillen 26a bzw. 26b können dann zusätzlich oder alternativ Rillen 40a und 40b der in den Figuren 8 und 9 dargestellten Art eingearbeitet werden. Die Rillen 40a und 40b weisen bevorzugt Böden 42 mit konvexer Oberfläche auf, wobei der Außendurchmesser der Böden 42 geringer ist als der Außendurchmesser 6a der Rillen 26a und 26b bzw. der Nuten 16a und 16b.

Figur 2 zeigt eine schematische Ansicht einer Ausführungsform einer erfindungsgemäßen Stange. Die Darstellung der Figur 2 entspricht im Wesentlichen der in Stufe E der Figur 1 gegebenen Darstellung, wobei jedoch in der Figur 2 das rechte Ende 2b bzw. die Aufbördelung 24b nicht im Schnitt dargestellt ist.

Figur 2 zeigt einen Querschnitt durch die Stange der Figur 2 entlang der Linie A-A in der Figur 2.

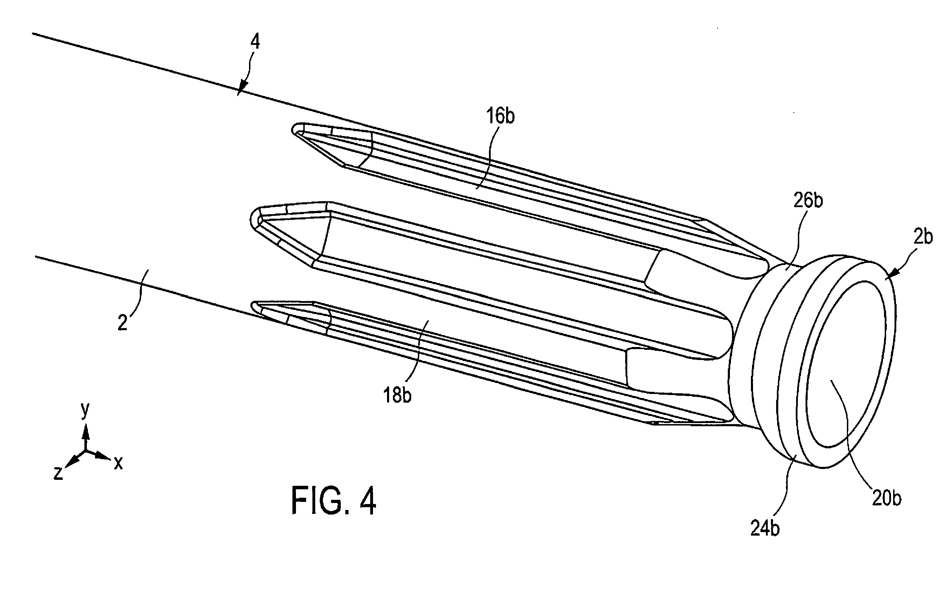

Figur 4 zeigt eine perspektivische und vergrößerte Ansicht des in der Figur 2 rechts dargestellten Endes der Stange der Figur 2.

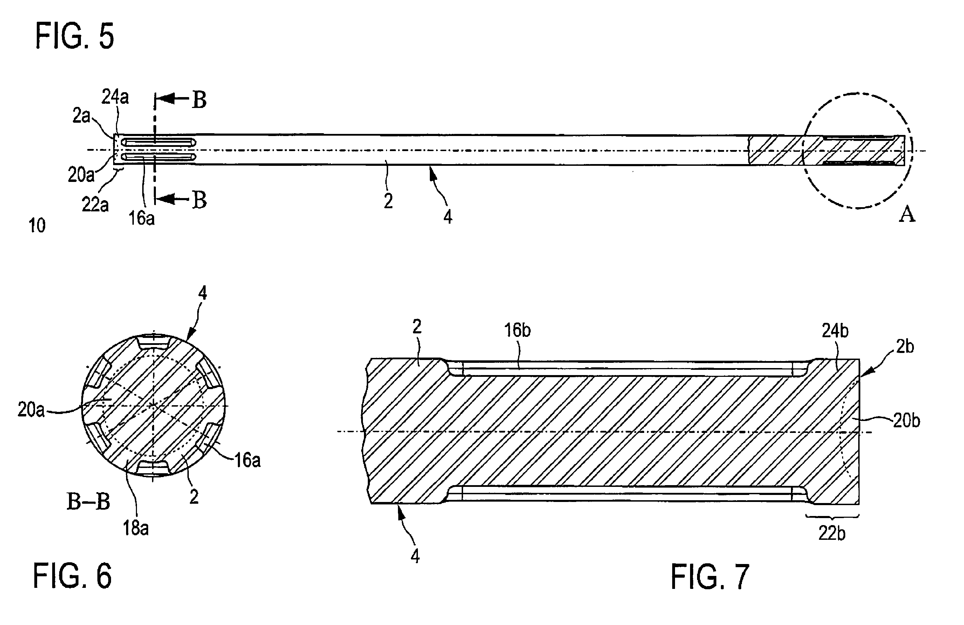

Figur 5 zeigt eine zweite Ausführungsform einer erfindungsgemäßen Stange. Im Gegensatz zu der ersten Ausführungsform ist bei der in den Figuren 5-7 dargestellten zweiten Ausführungsform der erfindungsgemäßen Stange keine Rille 26a bzw. 26b zwischen den Nuten 16a und der Aufbördelung 24a bzw. den Nuten 16b und der Aufbördelung 24b vorgesehen. Dies geschieht dadurch, dass bei der Herstellung der Schritt B aus Figur 1 weggelassen wird. Auch die bei der ersten Ausführungsform in der Figuren 1-4 beschriebenen Übergänge 8a und 10a von den Bereichen 8 bzw. 10 mit verringertem Durchmesser 6a bzw. 6b und den daraus resultierenden an ihren den Enden 2a bzw. 2b der Stange 2 zugewandten Enden abgeschrägten Stegen 18a und 18b sind in der zweiten Ausführungsform der Figuren 5-7 nicht vorgesehen, so dass insgesamt die Aufbördelungen 24a bzw. 24b direkt die Nuten 16a bzw. 16b begrenzen bzw. abschließen. Diese Variante der Stange 2 eignet sich insbesondere zur Übertragung von sehr hohen Drehmomenten besonders gut.

Figur 6 zeigt einen Querschnitt durch die Stange der Figur 5 entlang der Linie B-B in der Figur 5.

Figur 7 zeigt ein Teil der Stange der Figur 5 entsprechend dem Ausschnitt A in der Figur 5.

Figur 8 zeigt eine dritte Ausführungsform einer erfindungsgemäßen Stange. Bei der in der Figur 8 dargestellten Stange 2 ist parallel zu der Längsachse 12 der Stange 2 zwischen den Nuten 16a bzw. 16b und den jeweils zugeordneten Enden 2a, 2b der Stange 2 mindestens eine lateral zur Längsachse 12 der Stange 2 verlaufende Rille 40a bzw. 40b mit konvexer Oberfläche 42 eingearbeitet. In dem in der Figur 8 dargestellten Ausführungsbeispiel der Erfindung sind drei derartige Rillen 40a bzw. 40b an den jeweiligen Enden 2a bzw. 2b vorgesehen. Zwischen den mit konvexen Böden 42 versehenen Rillen 40a und 40b liegen unverändert die oben beschriebenen Rillen 26a und 26b mit flachem Boden, die jeweils einen Außendurchmesser 6a entsprechend dem in Schritt B der Figur 1 verringerten Außendurchmesser 6a aufweisen. Eine Aufbördelung ist nicht vorhanden, kann aber ergänzt werden.

Fig. 9 zeigt einen Teil der Stange 2 der Figur 8 entsprechend dem Ausschnitt C in der Figur 8. Der Ausschnitt C zeigt eine mit konvexem Boden 42 versehene Rille 40b am rechten Ende 2b der Stange 2. Diese Form des konvexen Bodens mit spitz zulaufenden und überhöhten Kanten 44, deren Außendurchmesser fast oder ganz den Außendurchmesser 6 der Stange 4 erreicht oder leicht, z.B. um etwa 5 %, übertrifft, hat sich als besonders vorteilhaft erwiesen, da eine derart ausgebildete Struktur ein Maximum an Zugkräften aufnehmen kann. Wenn beispielsweise an derart ausgebildete Strukturen ein aus Kunststoff bestehendes Verbindungsteil angebracht wird, können von dem Verbindungsteil extrem hohe Zugkräfte über die aus den Rillen 40a, 40b, 26a, 26b und den Kanten 44 gebildeten Enden in die Stange 2 eingebracht werden, wobei die Zugkräfte eine Höhe erreichen, die im Stand der Technik bisher an keiner Stelle erreicht worden ist. Wenn man annimmt, dass üblicherweise durch Rändelung oder Kordierung eine Zugkraft von 100 erreicht wird, dann erreicht die vorliegende Erfindung etwa 200.

## Patentansprüche

1. Verfahren zur Bearbeitung einer Stange (2), mit den Schritten:
- eine Stange (2) mit einer im Wesentlichen zylinderförmigen Umfangsoberfläche (4) wird zur Verfügung gestellt;
- in die Umfangsoberfläche (4) wird mindestens eine Nut (16a, 16b) im Wesentlichen parallel zu einer Längsachse (12) der Stange (2) und entlang mindestens eines Teils (14a, 14b) der Länge der Stange (2) eingebracht, in dem die Stange (2) mindestens teilweise in einen Hohlraum gezwungen wird, der eine im Wesentlichen zylinderförmige Innenoberfläche aufweist, aus der mindestens eine Nase nach innen ragt, **dadurch gekennzeichnet, dass**
- in einem weiteren Schritt solange gegen mindestens ein Ende (2a, 2b) der Stange (2) gedrückt wird, bis sich in einem an dem mindestens einen Ende (2a, 2b) der Stange (2) liegenden Abschnitt (22a, 22b) zumindest im Bereich der mindestens einen Nut (16a, 16b) eine Aufbördelung (24a, 24b) bildet.

2. Verfahren nach Anspruch 1,
wobei der Schritt des Zwingens der Stange (2) in den Hohlraum umfasst, dass die Stange (2) in den Hohlraum geschoben wird.

3. Verfahren nach einem der vorstehenden Ansprüche,
wobei zumindest an einem, bevorzugt planen, Ende (2a, 2b) der Stange (2) eine Einbuchtung (20a, 20b) eingebracht wird.

4. Verfahren nach dem Anspruch 3,
wobei die Einbuchtung (20a, 20b) mit einem, bevorzugt eine konvexe und/oder halbkugelförmige und/oder eine kegelförmige und/oder kegelstumpfförmige und/oder pyramidenförmige Oberfläche aufweisenden, Stempel in das Ende (2a, 2b) der Stange (2) eingedrückt wird.

5. Verfahren nach einem der Ansprüche 3-4,
wobei vor dem Einbringen der Einbuchtung (20a, 20b), bevorzugt auch vor dem Einbringen der mindestens einen Nut (16a, 16b), der Durchmesser (6) der Stange (2) entlang eines Bereiches (8, 8a, 10, 10a) an dem Ende (2a, 2b) der Stange (2), bevorzugt in mindestens zwei Stufen (8a, 10a) zunehmend, verringert wird.

6. Verfahren nach dem Anspruch 5,
wobei eine sich im Wesentlichen parallel zu der Längsachse (12) der Stange (2) erstreckende Länge des Bereichs (8, 8a, 10, 10a) einstellbar ist.

7. Verfahren nach einem der Ansprüche 5-6,
wobei das Verringern des Durchmessers (6) der Stange (2) in einem Ausmaß geschieht, dass der verringerte Durchmesser (6a, 6b) im Wesentlichen dem Durchmesser der Stange (2) an dem Boden der mindestens einen Nut (16a, 16b) entspricht.

8. Verfahren nach einem der Ansprüche 5-7,
wobei die längsaxiale Ausdehnung des die Aufbördelung (24a, 24b) aufweisenden Abschnittes (22a, 22b) am Ende (2a, 2b) der Stange (2) kleiner ist als die längsaxiale Ausdehnung des Bereiches (8, 8a, 10, 10a) der Stange (2) mit verringertem Durchmesser (6a, 6b), so dass nach dem Schritt des Aufbördelns in Längsrichtung der Stange (2) gesehen zwischen der Aufbördelung (24a, 24b) und dem Beginn der Nut (16a, 16b) noch eine, bevorzugt in einer entlang der Länge (12) der Stange (2) verlaufenden längsaxialen Ausdehnung einstellbaren, Rille (26a, 26b) mit dem zuvor verringerten Außendurchmesser (6a, 6b) verbleibt.

9. Verfahren nach einem der vorstehenden Ansprüche,
wobei das Einbringen der mindestens einen Nut (16a, 16b), das Aufbördeln des Abschnittes (22a, 22b) am Ende (2a, 2b) der Stange (2) und/oder das Einbringen der Einbuchtung (20a, 20b) in das Ende (2a, 2b) der Stange (2) auch, bevorzugt ausschließlich, durch Massivumformung, insbesondere Kaltumformung und/oder Warmumformung, der Stange (2) geschieht.

10. Verfahren nach einem der vorstehenden Ansprüche,
wobei parallel zu der Längsachse (12) der Stange (2) gesehen zwischen der mindestens einen Nut (16a, 16b) und dem zugeordneten Ende (2a, 2b) der Stange (2) mindestens eine Rille (40a, 40b), bevorzugt durch Walzen, lateral zur Längsachse (12) der Stange (2), bevorzugt mit konvexer Oberfläche (42), eingebracht wird, wobei weiter bevorzugt zuvor der Schritt des Bildens der Aufbördelung (24a, 24b), zumindest teilweise, weggelassen wird.

11. Verfahren nach dem Anspruch 10,
wobei der Außendurchmesser der Stange (2) am Boden (42) der mindestens einen Rille (40a, 40b) geringer ist als der Durchmesser (6a) an dem Boden der mindestens einen Nut (16a, 16b).

12. Stange (2), insbesondere Stange (2) zum Aufnehmen von axialen Zug- und Druckkräften und von Drehmomentkräften, mit:
- einer im Wesentlichen zylinderförmigen Umfangsoberfläche (4); und
- mindestens eine im Wesentlichen parallel zu einer Längsachse (12) der Stange (2) und entlang mindestens eines Teils (14a, 14b) der Länge der Stange (2) verlaufenden Nut (16a, 16b) in der Umfangsoberfläche (4) der Stange (2), **dadurch gekennzeichnet, dass**
- die Stange (2) in einem an mindestens einem Ende (2a, 2b) der Stange (2) liegenden Abschnitt (22a, 22b) zumindest im Bereich der mindestens einen Nut (16a, 16b) eine Aufbördelung (24a, 24b) aufweist.

13. Stange (2) nach Anspruch 12,
wobei die Nut (16a, 16b) einen im Wesentlichen U- und/oder V-förmigen Querschnitt aufweist.

14. Stange (2) nach einem der Ansprüche 12 oder 13,
wobei die Nut (16a, 16b) durch mindestens eine Aufbördelung zumindest teilweise abgeschlossen bzw. zum Ende der Stange hin begrenzt ist.

15. Stange (2) nach einem der Ansprüche 12-14,
wobei die Stange (2) an einem, bevorzugt planen, Ende (2a, 2b) eine Einbuchtung (20a, 20b) aufweist, wobei die Einbuchtung (20a, 20b) bevorzugt eine konkave und/oder halbkugelförmige und/oder eine kegelförmige und/oder kegelstumpfförmige und/oder pyramidenförmige Oberfläche aufweist, wobei weiter bevorzugt der Durchmesser der Einbuchtung (20a, 20b) bevorzugt etwa dem halben Durchmesser der Stange (2) entspricht.

16. Stange (2) nach einem der Ansprüche 12-15,
wobei zwischen dem die mindestens eine Nut (16a, 16b) aufweisenden Teil der Stange (2) und der Aufbördelung (24a, 24b) auf der Umfangsoberfläche (4) der Stange (2) eine Rille (26a, 26b) mit einem gegenüber dem keine Nut (16a, 16b) aufweisenden Teil der Stange (2) verringerten Außendurchmesser (6a, 6b) gebildet ist.

17. Stange (2) nach einem der Ansprüche 12-16,
wobei der Außendurchmesser der Aufbördelung (24a, 24b) im Wesentlichen gleich dem Außendurchmesser (6) der Stange (2) in dem keine Nut (16a, 16b) aufweisenden Teil der Stange (2) ist.

18. Stange (2) nach einem der Ansprüche 12-17,
wobei die mindestens eine Nut (16a, 16b), die Aufbördelung (24a, 24b), die Einbuchtung (20a, 20b) und/oder die Rille (26a, 26b) auch, bevorzugt ausschließlich, durch Massivumformung, insbesondere durch Kaltumformung und/oder Warmumformung, von im Wesentlichen aus Metall bestehenden Teilen eines entsprechenden Stangenrohlings gebildet sind.

19. Stange (2) nach einem der Ansprüche 12-18,
wobei parallel zu der Längsachse (12) der Stange (2) gesehen zwischen der mindestens einen Nut (16a, 16b) und dem zugeordneten Ende (2a, 2b) der Stange (2) mindestens eine lateral zur Längsachse (12) der Stange (2) verlaufende Rille (40a, 40b), bevorzugt mit konvexer Oberfläche (42), gebildet ist, wobei weiter bevorzugt an diesem Ende (2a, 2b) der Stange (2) keine Aufbördelung (24a, 24b) vorgesehen oder nur eine teilweise Aufbördelung (24a, 24b) vorgesehen ist, deren Außendurchmesser geringer ist als der Außendurchmesser (6) der Stange (2) in dem keine Nut (16a, 16b) aufweisenden Teil der Stange (2).

20. Stange (2) nach dem vorstehenden Anspruch,
der Außendurchmesser der Stange (2) am Boden (42) der mindestens einen Rille (40a, 40b) geringer ist als der Außendurchmesser (6a) an dem Boden der mindestens einen Nut (16a, 16b).

21. Stange (2) nach einem der Ansprüche 12-20,
wobei die Stange (2) an mindestens einem ihrer Enden (2a, 2b) mit einem bevorzugt aus Kunststoff bestehenden Verbindungsteil versehen ist.

22. Stange (2) nach einem der Ansprüche 12-21,
wobei die Stange (2) eine Pendelstütze oder ein Stabilenker für eine Fahrzeugaufhängung ist.

## Claims

1. Method for processing a rod (2) having the steps:
- a rod (2) having a substantially cylindrical peripheral surface (4) is provided;
- at least one groove (16a, 16b) is formed in the peripheral surface (4) substantially parallel with a longitudinal axis (12) of the rod (2) and along at least one portion (14a, 14b) of the length of the rod (2) by the rod (2) being at least partially forced into a hollow space which has a substantially cylindrical inner surface, from which at least one projection protrudes inwards, **characterised in that**
- in another step, pressure is applied against at least one end (2a, 2b) of the rod (2) until a flange (24a, 24b) is formed in a portion (22a, 22b) located at the at least one end (2a, 2b) of the rod (2) at least in the region of the at least one groove (16a, 16b).

2. Method according to claim 1,
the step for forcing the rod (2) into the hollow space involving the rod (2) being pushed into the hollow space.

3. Method according to either of the preceding claims, an indentation (20a, 20b) being formed at least at one preferably planar end (2a, 2b) of the rod (2).

4. Method according to claim 3,
the indentation (20a, 20b) being pressed into the end (2a, 2b) of the rod (2) by means of a stamp which preferably has a convex and/or semi-spherical and/or conical and/or frustoconical and/or pyramid-like surface.

5. Method according to either claim 3 or claim 4, the diameter (6) of the rod (2) being reduced, preferably increasingly in at least two steps (8a, 10a), along a region (8, 8a, 10, 10a) at the end (2a, 2b) of the rod (2), before the indentation (20a, 20b) is formed, preferably also before the at least one groove (16a, 16b) is formed.

6. Method according to claim 5,
a length of the region (8, 8a, 10, 10a) which extends substantially parallel with the longitudinal axis (12) of the rod (2) being able to be adjusted.

7. Method according to either claim 5 or claim 6, the diameter (6) of the rod (2) being reduced to such an extent that the reduced diameter (6a, 6b) substantially corresponds to the diameter of the rod (2) at the base of the at least one groove (16a, 16b).

8. Method according to any one of claims 5 to 7,
the longitudinally axial extent of the portion (22a, 22b) having the flange (24a, 24b) at the end (2a, 2b) of the rod (2) being smaller than the longitudinally axial extent of the region (8, 8a, 10, 10a) of the rod (2) with a reduced diameter (6a, 6b) so that, after the step of flanging, when viewed in the longitudinal direction of the rod (2) between the flange (24a, 24b) and the beginning of the groove (16a, 16b), there remains another channel (26a, 26b) which has the previously reduced outer diameter (6a, 6b) and which can preferably be adjusted in a longitudinally axial extent extending along the length (12) of the rod (2).

9. Method according to any one of the preceding claims, the formation of the at least one groove (16a, 16b), the flanging of the portion (22a, 22b) at the end (2a, 2b) of the rod (2) and/or the formation of the indentation (20a, 20b) in the end (2a, 2b) of the rod (2) also being carried out, preferably exclusively, by means of massive forming, in particular cold forming and/or hot forming, of the rod (2).

10. Method according to any one of the preceding claims, there being formed, when viewed parallel with the longitudinal axis (12) of the rod (2), between the at least one groove (16a, 16b) and the associated end (2a, 2b) of the rod (2), at least one channel (40a, 40b), preferably by means of rolling, laterally with respect to the longitudinal axis (12) of the rod (2), preferably with a convex surface (42), the step for forming the flange (24a, 24b) further preferably being at least partially omitted beforehand.

11. Method according to claim 10,
the outer diameter of the rod (2) at the base (42) of the at least one channel (40a, 40b) being smaller than the diameter (6a) at the base of the at least one groove (16a, 16b).

12. Rod (2), in particular a rod (2) for receiving axial tensile and pressure forces and torque forces, having:
- a substantially cylindrical peripheral surface (4); and,
- in the peripheral surface (4) of the rod (2), at least one groove (16a, 16b) which extends substantially parallel with a longitudinal axis (12) of the rod (2) and along at least a portion (14a, 14b) of the length of the rod (2), **characterised in that** the rod (2) has a flange (24a, 24b) in a portion (22a, 22b) located at least at one end (2a, 2b) of the rod (2), at least in the region of the at least one groove (16a, 16b).

13. Rod (2) according to claim 12,
the groove (16a, 16b) having a substantially U-shaped and/or V-shaped cross-section.

14. Rod (2) according to either claim 12 or claim 13, the groove (16a, 16b) being at least partially closed or delimited towards the end of the rod by at least one flange.

15. Rod (2) according to any one of claims 12 to 14, the rod (2) having an indentation (20a, 20b) at a preferably planar end (2a, 2b), the indentation (20a, 20b) preferably having a concave and/or semi-spherical and/or conical and/or frustoconical and/or pyramid-like surface, the diameter of the indentation (20a, 20b) further preferably corresponding to approximately half the diameter of the rod (2).

16. Rod (2) according to any one of claims 12 to 15, there being formed, between the portion of the rod (2) having the at least one groove (16a, 16b) and the flange (24a, 24b) on the peripheral surface (4) of the rod (2), a channel (26a, 26b) having an outer diameter (6a, 6b) which is reduced compared with the portion of the rod (2) having no groove (16a, 16b).

17. Rod (2) according to any one of claims 12 to 16, the outer diameter of the flange (24a, 24b) being substantially identical to the outer diameter (6) of the rod (2) in the portion of the rod (2) having no groove (16a, 16b).

18. Rod (2) according to any one of claims 12 to 17, the at least one groove (16a, 16b), the flange (24a, 24b), the indentation (20a, 20b) and/or the channel (26a, 26b) also being formed, preferably exclusively, by means of massive forming, in particular cold forming and/or hot forming, of portions of a corresponding rod blank substantially comprising metal.

19. Rod (2) according to any one of claims 12 to 18, there being formed, when viewed parallel with the longitudinal axis (12) of the rod (2) between the at least one groove (16a, 16b) and the associated end (2a, 2b) of the rod (2), at least one channel (40a, 40b) which extends laterally relative to the longitudinal axis (12) of the rod (2), preferably with a convex surface (42), there further preferably being provided at this end (2a, 2b) of the rod (2) no flange (24a, 24b) or there being provided only a partial flange (24a, 24b) whose outer diameter is smaller than the outer diameter (6) of the rod (2) in the portion of the rod (2) having no groove (16a, 16b).

20. Rod (2) according to the preceding claim,
the outer diameter of the rod (2) at the base (42) of the at least one channel (40a, 40b) being smaller than the outer diameter (6a) at the base of the at least one groove (16a, 16b).

21. Rod (2) according to any one of claims 12 to 20, the rod (2) being provided at least at one of the ends (2a, 2b) thereof with a connection portion which preferably comprises plastics material.

22. Rod (2) according to any one of claims 12 to 21, the rod (2) being a pendulum support or a stabilising rod for a vehicle suspension.

## Revendications

1. Procédé d'usinage d'une tige (2), comprenant les étapes suivantes :
- une tige (2) dotée d'une surface circonférentielle (4) sensiblement cylindrique est mise à disposition ;
- dans la surface circonférentielle (4), au moins une rainure (16a, 16b) est pratiquée sensiblement parallèlement à un axe longitudinal (12) de la tige (2) et le long d'au moins une partie (14a, 14b) de la longueur de la tige (2), tandis que la tige (2) est poussée de force au moins en partie dans une cavité présentant une surface intérieure sensiblement cylindrique de laquelle au moins un bec fait saillie vers l'intérieur, **caractérisé en ce que**
- au cours d'une étape ultérieure, une pression est exercée contre au moins une extrémité (2a, 2b) de la tige (2) jusqu'à ce qu'un rebord roulé (24a, 24b) se forme dans une partie (22a, 22b) située sur la ou les extrémités (2a, 2b) de la tige (2) au moins dans la zone de la ou des rainures (16a, 16b).

2. Procédé selon la revendication 1, dans lequel
l'étape consistant à pousser de force la tige (2) dans la cavité consiste à pousser la tige (2) dans la cavité.

3. Procédé selon l'une des revendications précédentes,
dans lequel un creux (20a, 20b) est ménagé au moins sur une extrémité (2a, 2b), de préférence plane, de la tige (2).

4. Procédé selon la revendication 3,
dans lequel le creux (20a, 20b) est pratiqué par pression dans l'extrémité (2a, 2b) de la tige (2) avec un poinçon présentant de préférence une surface convexe et/ou hémisphérique et/ou conique et/ou tronconique et/ou pyramidale.

5. Procédé selon l'une des revendications 3-4,
dans lequel, avant de rapporter le creux (20a, 20b), de préférence également avant de rapporter la ou les rainures (16a, 16b), le diamètre (6) de la tige (2), le long d'une zone (8, 8a, 10, 10a) sur l'extrémité (2a, 2b) de la tige (2), est réduit, de préférence constamment en au moins deux étapes (8a, 10a),.

6. Procédé selon la revendication 5,
dans lequel une longueur de la zone (8, 8a, 10, 10a) s'étendant sensiblement parallèlement à l'axe longitudinal (12) de la tige (2) est réglable.

7. Procédé selon l'une des revendications 5-6,
dans lequel la réduction du diamètre (6) de la tige (2) s'effectue avec une amplitude telle que le diamètre réduit (6a, 6b) correspond sensiblement au diamètre de la tige (2) au fond de la ou des rainures (16a, 16b).

8. Procédé selon l'une des revendications 5-7,
dans lequel l'extension axiale longitudinale de la partie (22a, 22b) comprenant le rebord roulé (24a, 24b) à l'extrémité (2a, 2b) de la tige (2) est inférieure à l'extension axiale longitudinale de la zone (8, 8a, 10, 10a) de la tige (2) dotée d'un diamètre réduit (6a, 6b), de sorte qu'après l'étape de roulage du rebord dans la direction longitudinale de la tige (2), vu entre le rebord roulé (24a, 24b) et le début de la rainure (16a, 16b), il reste encore une cannelure (26a, 26b) réglable, de préférence dans une extension longitudinale axiale s'étendant le long de la longueur (12) de la tige (2), dotée du diamètre extérieur (6a, 6b) précédemment réduit.

9. Procédé selon l'une des revendications précédentes,
dans lequel la réalisation de la ou des rainures (16a, 16b), le roulage du rebord de la partie (22a, 22b) sur l'extrémité (2a, 2b) de la tige (2) et/ou la réalisation du creux (20a, 20b) dans l'extrémité (2a, 2b) de la tige (2) se produise également, de préférence exclusivement, par formage de pièces massives, en particulier par formage à froid et/ou formage à chaud, de la tige (2).

10. Procédé selon l'une des revendications précédentes,
dans lequel, parallèlement à l'axe longitudinal (12) de la tige (2) vu entre la ou les rainures (16a, 16b) et l'extrémité associée (2a, 2b) de la tige (2), au moins une cannelure (40a, 40b), présentant de préférence une surface convexe (42), est rapportée de préférence par laminage, latéralement à l'axe longitudinal (12) de la tige (2), l'étape de formation du rebord roulé (24a, 24b) étant de préférence au préalable au moins en partie omise.

11. Procédé selon la revendication 10,
dans lequel le diamètre extérieur de la tige (2) au fond (42) de la ou des cannelures (40a, 40b) est inférieur au diamètre (6a) au fond de la ou des rainures (16a, 16b).

12. Tige (2), en particulier tige (2) destinée à absorber les efforts de traction et de pression axiaux et les forces de couple, comprenant :
- une surface circonférentielle (4) sensiblement cylindrique ; et
- au moins une rainure (16a, 16b) s'étendant sensiblement parallèlement à un axe longitudinal (12) de la tige (2) et le long d'au moins une partie (14a, 14b) de la longueur de la tige (2) dans la surface circonférentielle (4) de la tige (2),
**caractérisée en ce que** la tige (2) comprend, dans une partie (22a, 22b) située à au moins une extrémité (2a, 2b) de la tige (2), au moins dans la zone de la ou des rainures (16a, 16b), un rebord roulé (24a, 24b).

13. Tige (2) selon la revendication 12,
dans laquelle la rainure (16a, 16b) présente une section transversale sensiblement en forme de U et/ou de V.

14. Tige (2) selon l'une des revendications 12 ou 13,
dans laquelle la rainure (16a, 16b) est au moins en partie fermée ou délimitée en direction de l'extrémité de la tige par au moins un rebord roulé.

15. Tige (2) selon l'une des revendications 12-14,
dans laquelle la tige (2) comprend à une extrémité (2a, 2b), de préférence plane, un creux (20a, 20b), le creux (20a, 20b) présentant de préférence une surface concave et/ou hémisphérique et/ou conique et/ou tronconique et/ou pyramidale, de préférence encore, et dans laquelle le diamètre du creux (20a, 20b) correspond de préférence approximativement à la moitié du diamètre de la tige (2).

16. Tige (2) selon l'une des revendications 12-15,
dans laquelle une cannelure (26a, 26b) présentant un diamètre extérieur (6a, 6b) réduit par rapport à la partie de la tige (2) ne présentant aucune rainure (16a, 16b), est formée entre la partie de la tige (2) comprenant la ou les rainures (16a, 16b) et le rebord roulé (24a, 24b) sur la surface circonférentielle (4) de la tige (2).

17. Tige (2) selon l'une des revendications 12-16,
dans laquelle le diamètre extérieur du rebord roulé (24a, 24b) est sensiblement identique au diamètre extérieur (6) de la tige (2) dans la partie de la tige (2) ne comprenant aucune rainure (16a, 16b).

18. Tige (2) selon l'une quelconque des revendications 12-17,
dans laquelle la ou les rainures (16a, 16b), le rebord roulé (24a, 24b), le creux (20a, 20b) et/ou la cannelure (26a, 26b) sont également formés, de préférence exclusivement, par formage de pièces massives, en particulier par formage à froid et/ou formage à chaud, de parties sensiblement constituées de métal d'une ébauche de tige correspondante.

19. Tige (2) selon l'une des revendications 12-18,
dans laquelle au moins une cannelure (40a, 40b) s'étendant latéralement à l'axe longitudinal (12) de la tige (2), présentant de préférence une surface convexe (42), est formée parallèlement à l'axe longitudinal (12) de la tige (2) vu entre la ou les rainures (16a, 16b) et l'extrémité (2a, 2b) associée de la tige (2), et dans laquelle de préférence, aucun rebord roulé (24a, 24b) n'est prévu sur cette extrémité (2a, 2b) de la tige (2), ou un seul rebord roulé partiel (24a, 24b) est prévu, dont le diamètre extérieur est inférieur au diamètre extérieur (6) de la tige (2) dans la partie de la tige (2) ne comprenant aucune rainure (16a, 16b). ,

20. Tige (2) selon la revendication précédente,
dans laquelle le diamètre extérieur de la tige (2) au fond (42) de la ou des cannelures (40a, 40b) étant inférieur au diamètre extérieur (6a) au fond de la ou des rainures (16a, 16b).

21. Tige (2) selon l'une des revendications 12-20,
dans laquelle la tige (2) est pourvue à l'une de ses extrémités (2a, 2b) d'une partie de liaison constituée de préférence de matière polymère.

22. Tige (2) selon l'une quelconque des revendications 12-21,
dans laquelle la tige (2) est une biellette d'appui ou une biellette de barre stabilisatrice pour une suspension de véhicule.
